# EUROPEAN PATENT APPLICATION

(11) **EP 3 290 693 A1**
(43) Date of publication of application: **07.03.2018**
(21) Application number: 16186591.0
(22) Date of filing: 31.08.2016
(51) Int. Cl.: F03D 80/50, F03D 17/00

(54) **WIND SENSOR SUPPORT ASSEMBLY FOR A WIND TURBINE**

(71) Applicant: Siemens Aktiengesellschaft, 80333 München (DE)
(72) Inventor: Vad, Claus, 7400 Herning (DK)

(57) **Abstract**

There is described a wind sensor support assembly for a wind turbine. The assembly comprises (a) a holding member for holding a wind sensor, and (b) a support structure for supporting the holding member, the support structure being adapted to be fastened to an upper part of a wind turbine, wherein the support structure is adapted to allow adjustment of the position of the holding member relative to the upper part of the wind turbine. Furthermore, a wind turbine, a wind farm and a method of supporting a wind sensor on a wind turbine are described.

## Description

### Field of Invention

The present invention relates to the field of electrical energy producing devices, in particular to wind turbines. More specifically, the present invention relates to a wind sensor support assembly for a wind turbine. Furthermore, the present invention relates to a wind turbine comprising such support assembly and a wind farm comprising a plurality of wind turbines. Yet further, the present invention relates to a method of supporting a wind sensor on a wind turbine.

### Art Background

Wind speed and wind direction are important parameters for operating a wind turbine. The wind speed is e.g. used to set the load and/or blade angle (pitch) for a wind turbine during operation and the wind direction is used to adjust the direction of the wind turbine relative to the wind (yaw angle).

Traditionally, the wind parameter values are obtained by means of a wind sensor unit arranged on top of the nacelle of a wind turbine. However, as the dimensions of modern wind turbines increase, it may become difficult to reach the wind sensor(s) from the roof of the wind turbine, e.g. during installation and/or maintenance of the wind sensor(s). This problem is especially present when the wind sensor(s) are located relatively close to the rotor.

Accordingly, there may be a need for a way of mounting a wind sensor on a wind turbine that facilitates installation and maintenance of the wind sensor.

### Summary of the Invention

This need may be met by the subject matter according to the independent claims. Advantageous embodiments of the present invention are described by the dependent claims.

According to a first aspect of the invention, there is provided a wind sensor support assembly for a wind turbine. The described assembly comprises (a) a holding member for holding a wind sensor, and (b) a support structure for supporting the holding member, the support structure being adapted to be fastened to an upper part of a wind turbine, wherein the support structure is adapted to allow adjustment of the position of the holding member relative to the upper part of the wind turbine.

This aspect of the invention is based on the idea that the position of the holding member is adjustable. Thereby, when installing a wind sensor or during maintenance of the wind sensor, a position of the holding member (and thereby of the wind sensor) can be chosen that provides the best possible conditions for performing the installation or maintenance work. On the other hand, during normal operation of a wind turbine (i.e. power production) the holding member can be positioned differently, in particular in a position that provides ideal operation of the wind sensor.

According to an embodiment of the invention, the support structure is adapted to allow adjustment of the position of the holding member along a longitudinal axis of the wind turbine.

In other words, the support structure allows adjusting the position of the holding member result in a direction corresponding to the length dimension of the wind turbine.

According to a further embodiment of the invention, the position of the holding member is adjustable between a first end position with minimum distance to a rotor of the wind turbine and a second end position with maximum distance to the rotor of the wind turbine.

Here, the first end position may correspond to a measurement position, i.e. a position to be used during power production, and the second end position may correspond to a service position, i.e. a position to be used during installation or maintenance of a wind sensor where an operator has to be able to reach the holding member.

According to a further embodiment of the invention, an angle between the holding member and the upper part of the wind turbine, in particular the roof or upper surface of the nacelle, is maintained at a predetermined value during adjustment of the position of the holding member relative to the upper part of the wind turbine.

In other words, the angle between the wind turbine roof and the holding member remains the same independent on the particular position of the holding member (and thereby of the wind sensor).

This is particularly useful when performing adjustments of the measurement position of the holding member (and a wind sensor arranged thereon) in order to optimize wind sensor performance, e.g. by comparing wind sensor data obtained at different positions. By maintaining a constant angle between wind turbine and wind sensor at any position, it can be assured that the wind sensor alignment or orientation relative to the incoming wind is substantially the same at each position.

According to a further embodiment of the invention, the support structure comprises a first beam and a second beam, the first beam having one end connected to the holding member and another end that is adapted to be pivotally fastened to a surface of the upper part of the wind turbine, the second beam having one end connected to the holding member and another end that is adapted to be connected to an elevated structure on the upper part of the wind turbine.

In other words, the first beam is designed to extend between a surface of the upper part of the wind turbine (e.g. the wind turbine roof or the upper surface of a nacelle) and the holding member. The first beam is pivotally fastened to the surface such that the angle between the first beam and the surface may change when the position of the holding member is adjusted.

The second beam is designed to extend between the holding member and an elevated structure on the upper part of the wind turbine, such as e.g. a cooling unit. Thereby, the second beam may be reached by a service operator desiring to adjust the position of the holding member.

According to a further embodiment of the invention, the other end of the second beam is adapted to be slidably connected to the elevated structure, such that the position of the holding member is adjustable by sliding the second beam.

In other words, the position of the holding member (and thereby of a wind sensor arranged thereon) can be adjusted by sliding the second beam back and forth. At the same time, the first beam will pivot relative to the upper surface of the wind turbine.

According to a further embodiment of the invention, the other end of the second beam is slidably arranged in a sliding bearing.

The sliding bearing is preferably fastened on the elevated structure such that the second beam may slide through it.

The sliding bearing may be pivotable about an axis perpendicular to the second beam, such that sliding is possible along (almost) the entire length of the second beam. In combination with a pivotable joint between the first beam and the holding member, the pivotable sliding bearing may furthermore assure that the alignment of the holding member relative to the wind turbine is maintained while the position of the holding member is changed by sliding the second beam through the sliding bearing.

According to a further embodiment of the invention, the second beam comprises a folding mechanism, in particular a folding mechanism comprising a folding joint located between the respective ends of the second beam.

In this embodiment, the position of the holding member can be adjusted by folding the second beam in or out (i.e. by reducing or increasing a folding angle along the second beam) such that the effective distance between the elevated structure and the holding member is reduced or increased correspondingly.

According to a further embodiment of the invention, the assembly further comprises a locking mechanism for selectively fixating the second beam relative to the elevated structure.

The locking mechanism serves to fixate the second beam relative to the elevated structure when the holding member is in a desired position. To adjust the position of the holding member, the locking mechanism is released such that the second beam may be slid or folded.

According to a further embodiment of the invention, the support structure comprises a first beam and a wire, the first beam having one end connected to the holding member and another end that is adapted to be pivotally fastened to a surface of the upper part of the wind turbine, the wire having one end connected to the holding member and another end that is adapted to be connected to an elevated structure on the upper part of the wind turbine.

By pushing downwards at a point of the wire between the holding member and the elevated structure, e.g. by means of a rod, the wire will draw the holding member towards the elevated structure and thus adjust the position.

According to a second aspect of the invention, there is provided a wind turbine comprising (a) a rotor, (b) a generator, (c) a nacelle, (d) a wind sensor support assembly according to the first aspect or any one of the embodiments described above, and (e) a wind sensor, wherein the wind sensor support assembly is fastened to the nacelle, and wherein the wind sensor is mounted on the holding member of the wind sensor support assembly.

The wind turbine according to this aspect allows for flexible positioning of the wind sensor during installation/maintenance and during operation (power production).

According to an embodiment of the invention, the wind turbine further comprises a cooling unit arranged as an elevated structure on the upper part of the nacelle.

According to a third aspect of the invention, there is provided a wind farm comprising a plurality of wind turbines according to the second aspect or any of the above described embodiments.

According to a fourth aspect of the invention, there is provided a method of supporting a wind sensor on a wind turbine. The method comprises (a) providing a holding member for the wind sensor, and (b) providing a support structure for supporting the holding member, the support structure being fastened to an upper part of the wind turbine, wherein the support structure is adapted to allow adjustment of the position of the holding member relative to the upper part of the wind turbine.

This aspect of the invention is essentially based on the same idea as the first aspect described above.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

Figure 1 shows a wind sensor support assembly according to an exemplary embodiment of the invention.
Figure 2 shows the wind sensor support assembly of figure 1 in a further configuration.
Figure 3 shows the wind sensor support assembly of figure 1 in a further configuration.
Figure 4 shows a detailed rear view of the configuration of the wind sensor support assembly shown in figure 3.
Figure 5 shows a detailed view of a sliding bearing in accordance with an exemplary embodiment of the invention.
Figure 6 shows a detailed view of a holding member in accordance with an exemplary embodiment of the invention.
Figure 7 shows a wind turbine with a wind sensor support assembly according to a further exemplary embodiment of the invention.

### Detailed Description

The illustration in the drawing is schematic. It is noted that in different figures, similar or identical elements are provided with the same reference numerals or with reference numerals which differ only within the first digit.

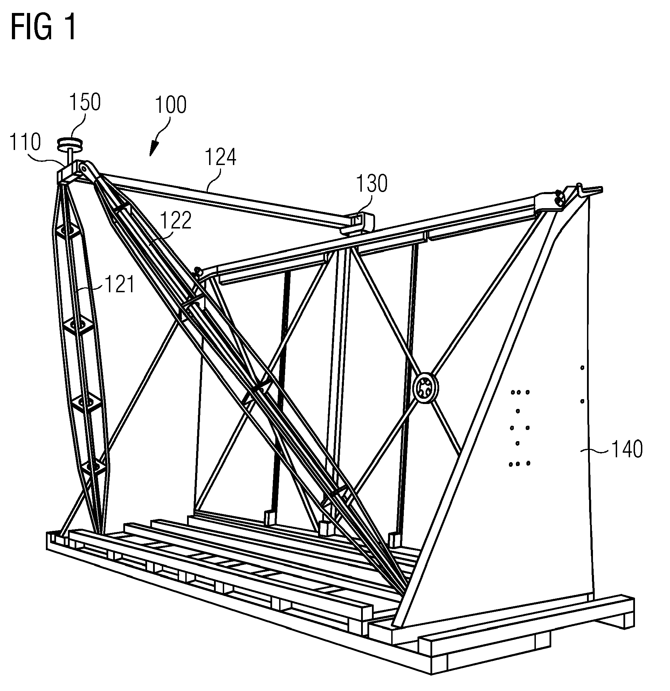

Figure 1 shows a wind sensor support assembly 100 according to an exemplary embodiment of the invention. More specifically, the assembly 100 comprises a holding member 110 and a support structure formed of beams 121, 122 and 124 which are all mechanically connected to the holding member 110. The two beams 121 and 122 extend downwards and towards the respective sides of a frame 140 of a cooling unit for a wind turbine generator (not shown). The lower ends of beams 121 and 122 are adapted to be pivotally fastened on a surface portion on top of a wind turbine, such as an upper nacelle surface. The beam 124 extends substantially horizontally towards a bearing 130 located centrally on an upper part of the frame 140. When a locking mechanism (not shown) is released, the bearing 130 allows the beam to slide such that the position of the holding member 110 and the wind sensor 150 arranged thereon can be adjusted, i.e. such that the holding member 110 with the wind sensor 150 can be moved closer to or farther away from the frame 140. When the beam 124 slides in the bearing 130, the pivotable mountings of beams 121 and 122 allow the latter to follow. In the configuration shown in figure 1, the beams 121 and 122 are tilted away from the frame 140, corresponding to a first end position with minimum distance to a wind turbine rotor (not shown) and thus maximum distance to the frame 140. This position may in particular be used during regular operation of a wind turbine, i.e. power production.

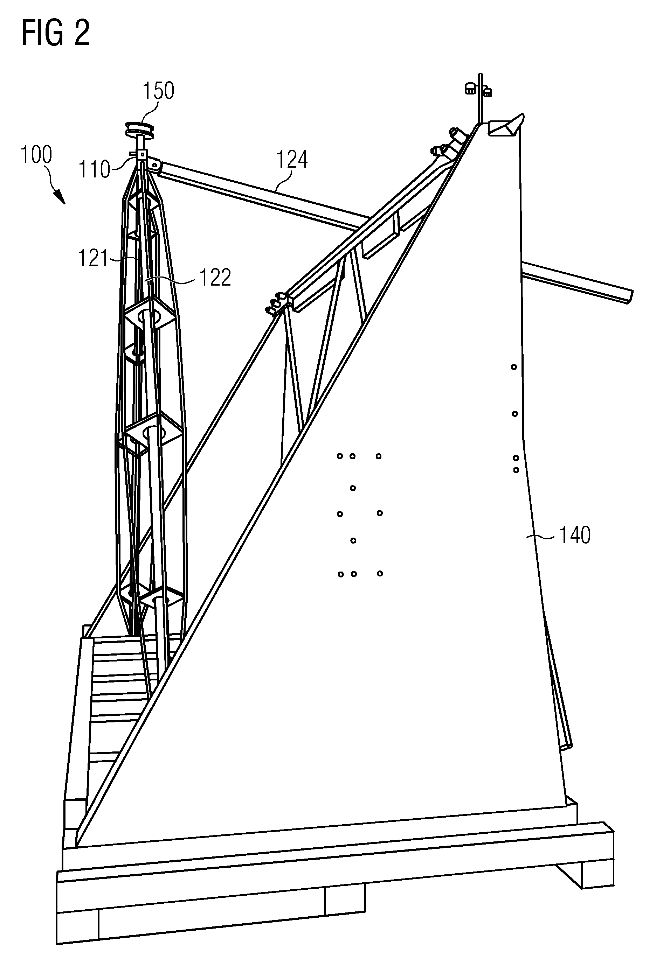

Figure 2 shows the wind sensor support assembly 100 of figure 1 in a further configuration. More specifically, in the configuration shown in figure 2, about the half of beam 124 has been pulled through the bearing 130 such that the holding member 110 with wind sensor 150 is located in an intermediate position where the beams 121 and 122 extend within a substantially vertical plane. This intermediate position may be one of several intermediate positions to be tested in order to find an optimum position for power production.

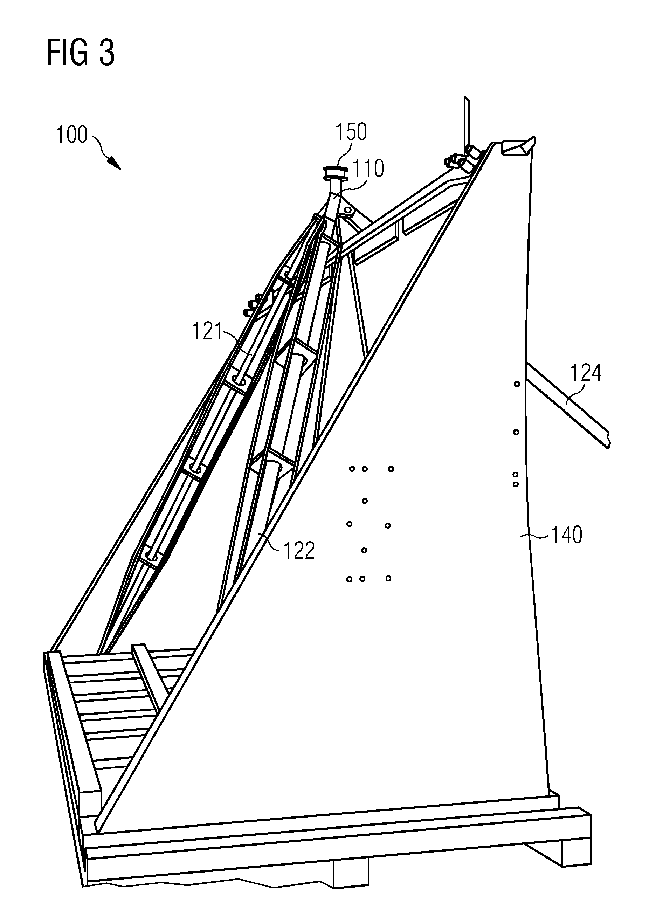

Figure 3 shows the wind sensor support assembly 100 of figure 1 in a further configuration. More specifically, in the configuration shown in figure 3, the entire beam 124 has been pulled through the bearing 130 such that the holding member 110 with wind sensor 150 is located in a position directly adjacent to the bearing 130 on the upper part of the frame 140. In this configuration, the beams 121 and 122 are tilted towards the frame 140, corresponding to a second end position with maximum distance to a wind turbine rotor (not shown) and thus minimum distance to the frame 140. This position may in particular be used for mounting or replacing the wind sensor 150 or when performing maintenance work on the wind sensor 150.

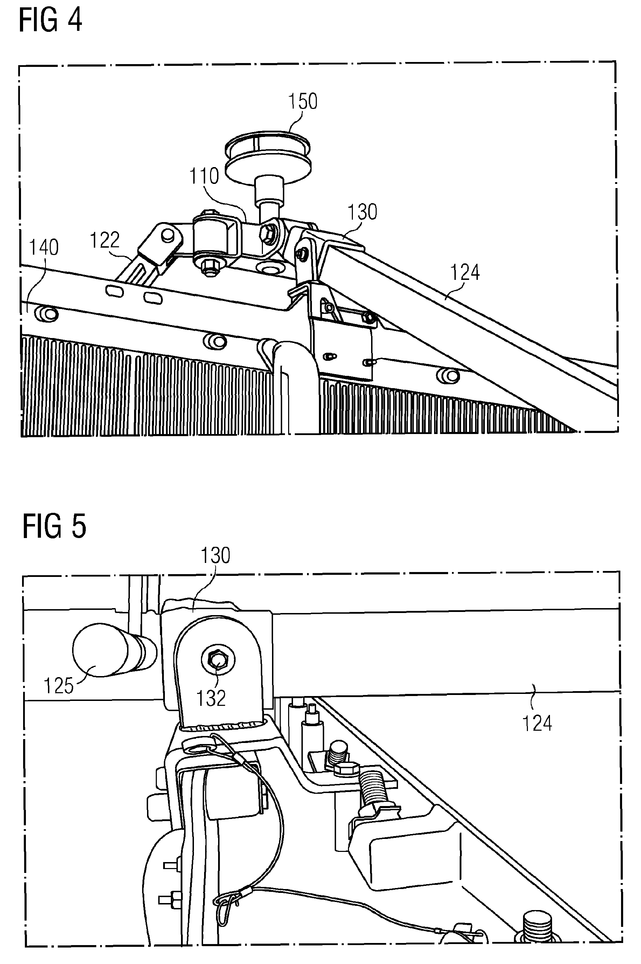

Figure 4 shows a detailed rear view of the configuration of the wind sensor support assembly 100 shown in figure 3. As mentioned above, the holding member 110 with the wind sensor 150 is positioned very close to the bearing 130 and can thus easily be reached by a mounting or service worker present on the cooling unit 140.

Figure 5 shows a detailed view of the sliding bearing 130 in accordance with an exemplary embodiment of the invention. More specifically, the sliding bearing 130 is formed as a rectangular cylindrical structure through which the beam 124 can slide, e.g. by pulling grip 125. Furthermore, the sliding bearing is pivotally arranged and thus capable of pivoting about pivot axis 132 when the beam 124 slides through the bearing 130. The bearing 130 may furthermore comprise a locking mechanism (not shown) for fixating the beam 124 in a desired position. The locking mechanism may for example comprise a plug that can be inserted through a hole in the bearing and a corresponding hole in the beam 124.

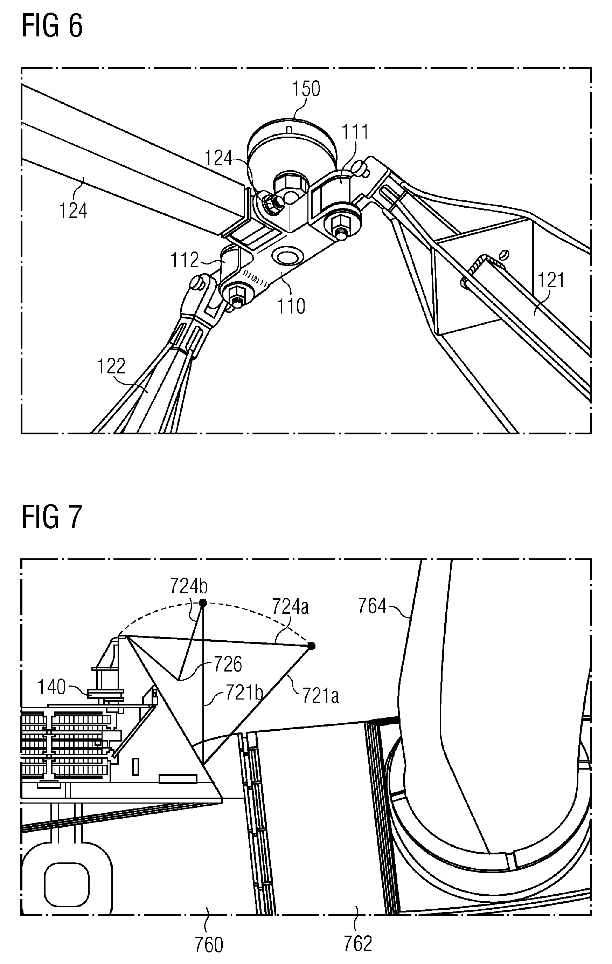

Figure 6 shows a detailed view of a holding member 110 in accordance with an exemplary embodiment of the invention. As shown, the holding member 110 comprises connecting pieces 111 and 112 arranged at opposite ends of the holding member 110 for respectively connecting with the beams 121 and 122. The connecting pieces are pivotable about a substantially vertical axis. Furthermore, the holding member 110 comprises a central connecting piece 114 for connecting with the beam 124. The connecting piece 114 is pivotable about a substantially horizontal axis, i.e. an axis perpendicular to the pivot axes of connecting pieces 111 and 112. The pivotable connecting pieces 111, 112 and 114 work together with the pivotable sliding bearing 130 (see figure 5) to assure that the holding member 110 maintains a constant angle relative to the surface of the wind turbine below it when the beam 124 is slid through the sliding bearing 130 to adjust the position of the holding member 110. In other words, the orientation of the wind sensor 150 arranged on the holding member 110 relative to the incoming wind will be the same in all positions.

Figure 7 shows a wind turbine with a wind sensor support assembly according to a further exemplary embodiment of the invention. More specifically, figure 7 shows two configurations of the support assembly. In a first configuration, the lower beam 721a and upper beam 724a extend as straight lines between respective mounting points on the nacelle 760 and on top of the frame 140 of the cooling unit. Thereby, the holding member and wind sensor (not shown in detail in figure 7) located at the joint between the beams 721a and 724a is positioned at a forward end position above the wind turbine generator 762 and close to the rotor blade 764. In the second configuration, a folding mechanism 726 has been activated such that the upper beam 724b is folded, causing the lower beam 721b to be substantially upright. Accordingly, in the second configuration, the holding member and wind sensor (not shown in detail in figure 7) located at the joint between the beams 721b and 724b is positioned at an intermediate position between the frame 140 and the forward end position of the first configuration. For maintenance work, the folding mechanism may be operated to cause the upper beam to consist of two parallel pieces, such that the holding member and wind sensor will be positioned at the upper part of the frame 140, i.e. like the situation shown in figures 3 and 4 in conjunction with the preceding embodiment. The folding mechanism 726 may comprise a locking mechanism that can be operated by an operator present on the platform behind the frame 140. Such locking mechanism may utilize mechanical, hydraulic and/or electrical components to lock and release the folding mechanism 726.

As an alternative to the foldable beam described above in conjunction with figure 7, a wire, in particular a steel wire, may be used. The wire may be pushed downwards or it may simply be rolled in or out in order to adjust the position of the holding member.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A wind sensor support assembly for a wind turbine, the assembly comprising
a holding member for holding a wind sensor, and
a support structure for supporting the holding member, the support structure being adapted to be fastened to an upper part of a wind turbine,
wherein the support structure is adapted to allow adjustment of the position of the holding member relative to the upper part of the wind turbine.

2. The assembly according to the preceding claim, wherein the support structure is adapted to allow adjustment of the position of the holding member along a longitudinal axis of the wind turbine.

3. The assembly according to any one of the preceding claims, wherein the position of the holding member is adjustable between a first end position with minimum distance to a rotor of the wind turbine and a second end position with maximum distance to the rotor of the wind turbine.

4. The assembly according to any one of the preceding claims, wherein an angle between the holding member and the upper part of the wind turbine is maintained at a predetermined value during adjustment of the position of the holding member relative to the upper part of the wind turbine.

5. The assembly according to any one of the preceding claims, wherein the support structure comprises a first beam and a second beam, the first beam having one end connected to the holding member and another end that is adapted to be pivotally fastened to a surface of the upper part of the wind turbine, the second beam having one end connected to the holding member and another end that is adapted to be connected to an elevated structure on the upper part of the wind turbine.

6. The assembly according to the preceding claim, wherein the other end of the second beam is adapted to be slidably connected to the elevated structure, such that the position of the holding member is adjustable by sliding the second beam.

7. The assembly according to the preceding claim, wherein the other end of the second beam is slidably arranged in a sliding bearing.

8. The assembly according to claim 5, wherein the second beam comprises a folding mechanism.

9. The assembly according to any one of claims 6 to 8, further comprising a locking mechanism for selectively fixating the second beam relative to the elevated structure.

10. The assembly according to any one of claims 1 to 4, wherein the support structure comprises a first beam and a wire, the first beam having one end connected to the holding member and another end that is adapted to be pivotally fastened to a surface of the upper part of the wind turbine, the wire having one end connected to the holding member and another end that is adapted to be connected to an elevated structure on the upper part of the wind turbine.

11. A wind turbine comprising a rotor, a generator, a nacelle, a wind sensor support assembly according to any one of the preceding claims, and a wind sensor,
wherein the wind sensor support assembly is fastened to the nacelle, and wherein the wind sensor is mounted on the holding member of the wind sensor support assembly.

12. The wind turbine according to the preceding claim, further comprising a cooling unit arranged as an elevated structure on the upper part of the nacelle.

13. A wind farm comprising a plurality of wind turbines according to claim 11 or 12.

14. A method of supporting a wind sensor on a wind turbine, the method comprising
providing a holding member for the wind sensor, and
providing a support structure for supporting the holding member, the support structure being fastened to an upper part of the wind turbine,
wherein the support structure is adapted to allow adjustment of the position of the holding member relative to the upper part of the wind turbine.
